Europäisches Patentamt

European Patent Office

Office européen des brevets

(19)

(11)  **EP 1 160 203 A1**

(12)  ## DEMANDE DE BREVET EUROPEEN

(43) Date de publication:
    **05.12.2001 Bulletin 2001/49**

(51) Int Cl.⁷: **C02F 1/32**, C02F 1/467

(21) Numéro de dépôt: **01401365.0**

(22) Date de dépôt: **23.05.2001**

(84) Etats contractants désignés:
    **AT BE CH CY DE DK ES FI FR GB GR IE IT LI LU MC NL PT SE TR**
    Etats d'extension désignés:
    **AL LT LV MK RO SI**

(30) Priorité: **24.05.2000 FR 0006664**

(71) Demandeur: **ELECTRICITE DE FRANCE**
    **75008 Paris (FR)**

(72) Inventeurs:
    • **Reid, Véronique**
      **57500 Saint-Avold (FR)**
    • **Bailleux, Christian**
      **75019 Paris (FR)**
    • **Braun, André**
      **76889 Barbelroth (DE)**

    • **Worner, Michael**
      **76196 Remchingen-Singen (DE)**
    • **Schnabel, Claudia**
      **76133 Karlsruhe (DE)**

(74) Mandataire: **Touati, Catherine**
    **Cabinet Plasseraud,**
    **84, rue d'Amsterdam**
    **75440 Paris Cedex 09 (FR)**

Remarques:
    Une requête en rectification du text de la revendication 9 a été présentée conformément à la règle 88 CBE. Il est statué sur cette requête au cours de la procédure engagée devant la division d'examen (Directives relatives à l'examen pratiqué à l'OEB, A-V, 3.).

(54)  **Procédé et dispositif pour la dégradation de composés organiques en solution aqueuse par photolyse vuv de l'eau et production électrochimique de dioxigène**

(57)  L'invention concerne un procédé d'oxydation de composés organiques en solution aqueuse caractérisé par le fait au'on réalise une photolyse à rayonnement ultraviolet extrême et qu'on produit du dioxygène par électrochimie et un dispositif permettant sa mise en oeuvre.

EP 1 160 203 A1

**Description**

La présente invention concerne un nouveau procédé de traitement de composés organiques en solution aqueuse par dégradation photochimique et production électrochimique de dioxygène. L'invention concerne aussi un dispositif permettant la mise en oeuvre de ce procédé.

L'industrialisation continue, la production croissante et l'utilisation répandue de quantités importantes de produits organiques toxiques ou néfastes pour l'environnement ont causé de sévères problèmes de contamination environnementale, augmentant de façon substantielle le volume d'eau polluée.

On s'est naturellement dirigé vers l'utilisation de procédés biologiques, sans utilisation d'agents chimiques, afin de dépolluer ces eaux tout en respectant l'environnement.

Toutefois, certains de ces produits organiques sont toxiques et abiotiques, ce qui signifie qu'il résistent aux traitements biologiques.

Ainsi, certaines méthodes abiotiques de traitement de l'eau ont été proposées et développées afin d'éliminer ou de dégrader les polluants toxiques ou résistants aux traitements classiques. Parmi celles-ci, on peut citer les procédés d'oxydation avancée (Advanced Oxidation Processes AOPs) qui présentent un intérêt grandissant pour la dégradation efficace des composés organiques du fait qu'ils agissent indépendamment de la structure des composés et permettent d'atteindre une minéralisation complète.

Parmi les traitements abiotiques qui ne nécessitent pas l'utilisation de produits de traitement chimiques, une voie particulièrement indiquée a été ouverte grâce à la photochimie.

L'utilisation de lampes à rayonnement ultraviolet extrême permet en effet de réaliser la photolyse directe de l'eau en radicaux hydroxyles. Le rayonnement ultraviolet VUV (encore appelé ultraviolet lointain ou extrême) se situe dans la région de longueur d'onde d'environ 210 nm à 3 nm.

La demande de brevet CH 683517 propose à cet effet, l'utilisation de lampes à excimères de xénon.

Les radicaux hydroxyles ainsi obtenus, qui ont un pouvoir oxydant et une réactivité chimique très élevés tout en étant en revanche très peu sélectifs envers les composés organiques, vont réaliser une dégradation oxydante des composés organiques dans l'eau sans ajout de produits chimiques.

En effet, les radicaux organiques, formés par réaction avec les radicaux hydroxyles, réagissent avec le dioxygène dissous présent dans la lame d'eau irradiée sur une épaisseur de l'ordre d'une centaine de micromètres. Il en résulte un déficit local en dioxygène dans cette zone irradiée, qui, en retour, limite la minéralisation des composés organiques.

Des solutions mécaniques et hydrodynamiques se sont révélées inefficaces pour apporter du dioxygène dans cette zone irradiée.

Les procédés photochimiques proposés jusqu'à présent ne permettent donc pas un traitement réellement efficace des composés organiques en phase aqueuse.

A la suite de recherches approfondies, de façon inatendue, les inventeurs ont trouvé qu'il était possible de pallier au déficit en dioxygène dans la zone irradiée en réalisant une électrolyse de l'eau à proximité de la zone irradiée.

L'invention a donc pour objet un procédé de traitement des composés organiques en phase aqueuse qui est abiotique, qui ne nécessite pas l'utilisation de produits chimiques, qui permet d'obtenir une eau d'un haut degré de pureté et qui est aisément transposable à l'industrie. Le procédé selon l'invention consiste en une oxydation de composés organiques en solution aqueuse, et est caractérisé par le fait qu'on réalise une photolyse à rayonnement ultraviolet extrême et qu'on produit du dioxygène par électrochimie.

De préférence, le rayonnement UV a une longueur d'onde comprise entre 120 nm et 210 nm, de préférence comprise entre 160 nm et 210 nm, plus préférentiellement encore égale à environ 172 nm.

On entend par composés organiques en solution aqueuse des composés organiques dissous ou en suspension ou encore en dispersion dans une solution aqueuse.

Le procédé conforme à l'invention est particulièrement adapté aux composés organiques toxiques et non traitables par des méthodes biologiques ou par l'addition de produits chimiques oxydants.

Si l'on désire récupérer des polluants organiques en cours de dégradation, il est possible de limiter la durée de traitement et d'arrêter l'oxydation avant la minéralisation complète des composés organiques.

Par minéralisation, on entend la dégradation des composés organiques jusqu'à l'obtention de composés qui ne sont plus organiques, tels que, notamment : $CO_2$, $H_2O$ et acides minéraux.

Au cours du procédé, l'homolyse de l'eau se fait en radical hydroxyle et atome d'hydrogène (1). Elle est réalisée par photolyse. Ces radicaux, très réactifs et de courte durée de vie, induisent une série de réactions.

Les radicaux hydroxyles réagissent avec les substances organiques de formule générale RH, soit par abstraction d'hydrogène (2), soit par addition sur les liaisons π. Les radicaux formés sur un carbone (R•) réagissent de façon efficace, avec l'oxygène moléculaire dissous, générant des radicaux peroxyles (3) qui possèdent des durées de vie relativement longues et peuvent diffuser hors du volume irradié dans le volume de la solution.

$$H_2O + h\nu \rightarrow H\bullet + HO\bullet \qquad (1)$$

$$RH + HO\bullet \rightarrow H_2O + R\bullet \qquad (2)$$

$$R\bullet + O_2 \rightarrow ROO\bullet \qquad (3)$$

En plus des radicaux hydroxyles, les radicaux hydroperoxyles formés par le piégeage d'hydrogène atomique par le dioxygène (4) peuvent également réagir avec les substances organiques générant ainsi de nouveaux radicaux organiques R•.

Les radicaux peroxyles initient des réactions thermiques en chaîne conduisant à la dégradation oxydante et finalement à la minéralisation des substances organiques. Pour ces processus de dégradation, le dioxygène est également nécessaire (5).

$$O_2 + H\bullet \rightarrow HO_2\bullet \qquad (4)$$

$$ROO\bullet + O_2 \rightarrow\rightarrow\rightarrow CO_2 + H_2O \qquad (5)$$

Compte tenu du fait :

- que la réaction a un rendement quantique élevé,
- que les radicaux hydroxyles ont une diffusion réduite dans le milieu en raison de leur très faible durée de vie (< 1 μs),
- que la concentration de radicaux hydroxyles dans la zone irradiée est élevée par rapport à celle des polluants organiques, ce qui conduit à une oxydation quantitative et génère une concentration locale élevée en radicaux R•,
- que la concentration locale relativement élevée en atomes d'hydrogène pouvant être piégés par le dioxygène génère une concentration locale en radicaux hydroxyles qui à leur tour peuvent réagir avec les composés organiques pour produire des radicaux R•,

le dioxygène dissous est en fait plus rapidement consommé qu'il ne peut être fourni par diffusion dans ce volume irradié.

L'extrême hétérogénéité des concentrations des espèces en solution entre le volume des réactions primaires et le volume non irradié de la solution conduit à un déficit local en oxygène.

La concentration en oxygène dissous étant cruciale pour la vitesse de dégradation oxydante des composés organiques, la concentration localement insuffisante en oxygène dissous est un facteur limitant pour le développement de la photolyse UV dans le but de dégrader et/ou minéraliser.

Le dioxygène généré électrochimiquement se dissout dans la solution irradiée et, les petites bulles monodispersées, produites à la surface de l'électrode, servent de gaz tampon maintenant la saturation en oxygène et augmentant par la même occasion la microturbulence en se désorbant de l'anode. Ce dernier effet est vraisemblablement assez important pour réduire l'extrême hétérogénéité des espèces en solution de ces systèmes réactionnels.

Le dispositif pour la mise en oeuvre de ce procédé comprend un réacteur dans lequel se trouve la solution à traiter et comprend au moins une lampe émettant un rayonnement ultraviolet extrême, placée de façon à irradier au moins une partie de la solution à traiter , et au moins une cathode et une anode, ladite anode étant au moins partiellement immergée dans la solution à traiter et placée à proximité de la zone de solution irradiée par ladite lampe.

Ainsi, dans le dispositif, la production de dioxygène a lieu à l'intérieur ou à proximité du volume irradié. Selon un mode de réalisation avantageux du dispositif conforme à l'invention, la distance séparant la lampe de l'anode est de préférence inférieure à 10 mm, plus préférentiellement inférieure à 4 mm et plus préférentiellement encore égale à 2 mm.

Les lampes permettant un rayonnement dans les longueurs d'ondes de l'UV extrême fonctionnent généralement à une différence de potentiel autour de 5000 Volts et à une fréquence d'environ 200KHz.

En pratique, en raison de prétendus risques électriques, il est considéré comme difficile de placer des électrodes à proximité d'une telle lampe.

Les inventeurs ont cependant outrepassé ce préjugé technique en construisant le dispositif conforme à l'invention.

Comme lampe UV, on peut utiliser une lampe au mercure de basse pression, préférentiellement, une lampe à excimère au xénon ou au fluorure d'argon couplée à des électrodes séparées.

De préférence, la lampe émet à une longueur d'onde comprise entre 120 nm et 210 nm, de préférence comprise entre 160 nm et 210 nm, et plus préférentiellement encore égale à environ 172 nm.

Les derniers progrès en matière de lampes excimères permettent par ailleurs d'envisager des formes variées pour ces sources de rayonnement.

De même, de nombreuses formes et de nombreux matériaux sont possibles pour les électrodes.

L'anode et la cathode peuvent être en tout matériau permettant une électrolyse de l'eau, préférablement en matériau n'interagissant pas avec la solution à traiter. L'anode peut notamment être en acier ou en platine et peut être une anode DSA (Dimensionally Stable Anode).

On peut utiliser des électrodes séparées. Cette séparation peut notamment être réalisée par une membrane SPE (solid polymer electrolyte) servant d'électrolyte.

L'anode peut par exemple avoir la structure d'une grille. Elle peut avoir une structure poreuse pour augmenter la surface de contact avec le milieu.

Ces nombreuses variations de formes, de tailles et de matériaux donnent bien entendu lieu à un grand nombre d'agencements possibles pour le dispositif selon l'invention. Ces agencement ne se limitent évidemment pas aux exemples qui suivent.

Selon un mode de réalisation particulier de l'invention, le dispositif conforme à l'invention présente une structure en feuillet qui répète une succession de cathodes, d'anodes et de lampes UV extrême de la façon suivante : sont placées successivement, en série, une lampe UV extrême, puis une enceinte laissant passer les radiations de la lampe et pouvant contenir la solution à traiter, puis une anode et une cathode, puis éventuellement à nouveau, une lampe UV extrême, une enceinte contenant la solution à traiter, une anode et une cathode et ainsi de suite.

Selon un mode avantageux de réalisation, le dispositif conforme à l'invention comprend une enceinte contenant de l'eau, des électrodes et une lampe qui sont des cylindres concentriques. Dans ce mode de réalisation avantageux, par exemple, la lampe est placée au centre du dispositif, celle-ci est entourée de l'enceinte contenant la solution à irradier ; cette enceinte contenant la solution est entourée de l'anode puis de la cathode, la cathode étant séparée de l'anode par une membrane laissant passer les ions. Dans ce mode avantageux de réalisation du dispositif conforme à l'invention, on peut aussi placer la cathode dans une boucle extérieure au dispositif principal.

Bien entendu, dans le dispositif, la cathode peut être placée au centre, et l'anode peut être placée autour de la cathode, l'anode étant séparée de la cathode par une membrane laissant passer les ions et la lampe est placée autour des électrodes.

Il est évident que dans les modes de réalisation possibles, du dispositif conforme à l'invention, tous les éléments disposés entre la lampe et la solution à traiter doivent permettre le passage du rayonnement ultraviolet extrême.

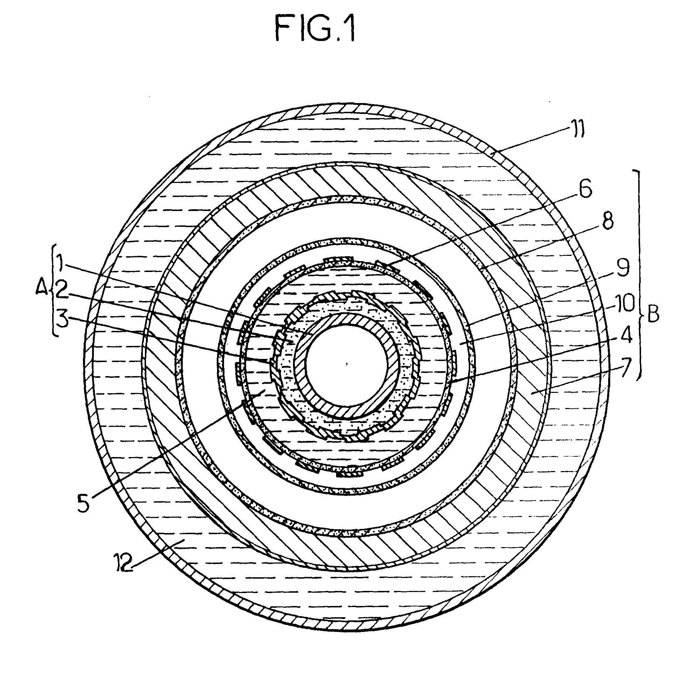

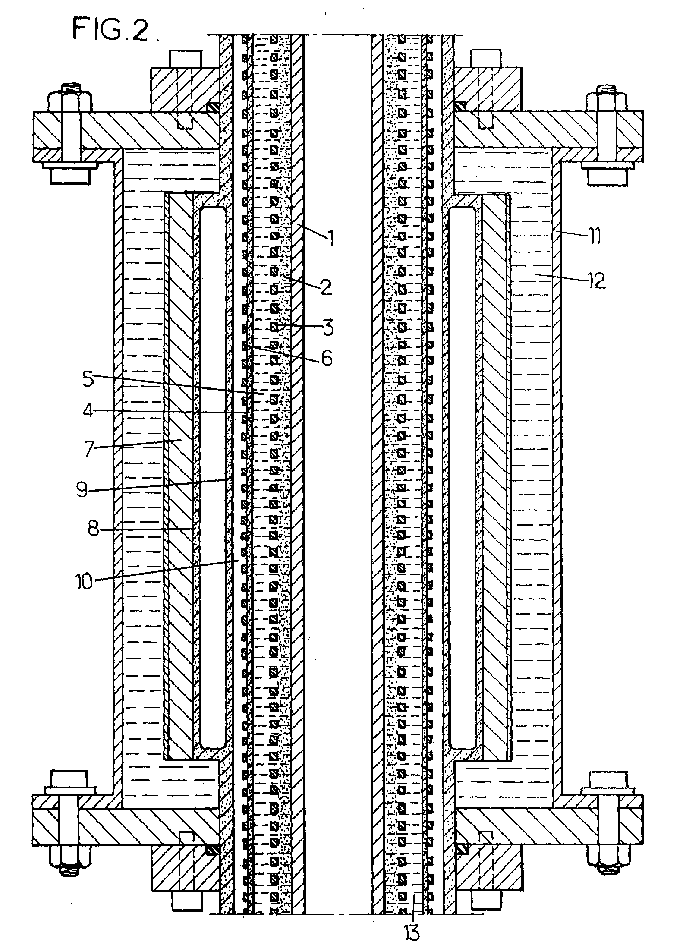

Un mode de réalisation avantageux du dispositif conforme à l'invention va maintenant être exposé plus en détail à l'aide des Figures 1 et 2.

- La Figure 1 est une vue en coupe horizontale d'un mode particulier de réalisation du dispositif conforme à l'invention,
- La Figure 2 est une vue en coupe verticale selon l'axe II-II' du dispositif de la Figure 1.

Sur la Figure 1, le dispositif comprend principalement un appareillage électrochimique (A) , une enceinte contenant la solution à traiter et un appareillage photochimique (B).

L'appareillage électrochimique concentrique (A) comprend, au centre, une cathode cylindrique (1), une membrane de séparation SPE (solid polymer electrolyte) (2), entourant la cathode cylindrique (1), et une anode cylindrique se présentant sous la forme d'une grille (3) entourant la membrane SPE. Autour et concentriquement à l'anode, est placé un tube de suprasil (4) qui est l'enveloppe interne de l'appareillage photochimique concentrique (B). La solution à traiter (5) est contenue dans l'espace délimité par la cathode (1) et ledit tube de suprasil (4) qui permet de laisser passer le rayonnement ultraviolet extrême. L'appareillage photochimique (B) ou lampe à excimère comprend une électrode interne (6) et une électrode externe (7) entre lesquelles est placée une enceinte en suprasil contenant du xénon. Cette enceinte est constituée d'une paroi externe (8) en suprasil en contact avec l'électrode externe (7) et une paroi interne (9) en suprasil formant avec le tube en suprasil (4), une enceinte contenant de l'azote (10) et dans laquelle est placée l'électrode interne (6).

L'ensemble du dispositif décrit ci-dessus et comprenant les appareillages (A) et (B) est placé dans une enceinte fermée (11) dans lequel circule de l'eau de refroidissement (12).

La solution à traiter (5) est acheminée vers le dispositif par l'arrivée (13) puis va passer entre le premier tube de suprasil (4) et la cathode (1). La solution est irradiée par les ultraviolets extrêmes du dispositif (B) et électrolysée à l'aide de l'anode (3) et de la cathode (1). Du dioxygène est produit sur l'anode (3) et diffuse à travers le volume de solution irradiée. La dégradation des composés organiques contenus dans la solution à traiter (5) a ainsi lieu.

Le dispositif permet une grande souplesse d'adaptation aux exigences du traitement. Il existe donc de nombreuses possibilités de mise en oeuvre du dispositif. Il est possible, par exemple, de placer plusieurs réacteurs en série ou en parallèle ; il est encore possible de faire fonctionner l'appareillage en alternance ou en continu, de traiter la solution par volumes déterminés ou/et en continu, de régler le débit ; il est aussi possible de réaliser une ou plusieurs boucles de traitement afin de faire passer la solution à traiter plusieurs fois dans le réacteur.

Le procédé et le dispositif conformes à l'invention, sont appropriés au traitement de tout effluent aqueux contenant des polluants organiques susceptibles d'être dégradés par oxydation. Comme application avantageuse de l'invention, on peut citer, par exemple le traitement des eaux de lavage sortant des usines de fabrication de composants électroniques, ou bien les eaux résiduelles des procédés de fabrication des produits pharmaceutiques ou phytosanitaires devant être traités isolément.

Quelques exemples, non limitatifs et non exhaustifs, de dégradation de composés organiques, selon le procédé de l'invention vont maintenant être exposés.

EXEMPLE 1 : DEGRADATION DU PHENOL

Dans une première série d'expériences, on conduit la photolyse d'une solution aqueuse contenant du phénol à 50 ppm pendant 105 minutes à l'aide d'une lampe à excimère au xénon alimentée par une alimentation en courant alternatif (AC) haute tension. L'électrode interne de la lampe consiste en une feuille d'aluminium et est refroidie avec de l'eau distillée circulant entre la lampe et un réservoir servant d'échangeur de chaleur. L'électrode externe de la lampe est une grille d'acier filet fixée autour de la surface de la lampe et connectée à la terre.

On mesure la concentration en phénol résiduel dans la solution à 0, 20, 40, 60, 80 et 105 minutes.

Dans une seconde expérience, on réalise l'électrolyse d'une solution de même concentration de phénol (50ppm) pendant 105 minutes. Pour l'électrolyse, l'anode est une grille de platine. Un faisceau de fils acier inox (0,5 mm de diamètre) est placé dans une boucle externe du réacteur et utilisé comme cathode ; les deux électrodes sont connectées à une alimentation stabilisée en courant continu (DC) (VG Electromagnet, max 6A/100 W).

De même, on mesure la concentration en phénol résiduel dans la solution à 0, 20, 40, 60, 80 et 105 minutes.

Enfin, dans une troisième expérience, on réalise simultanément la photolyse et l'électrolyse d'une solution de phénol à même concentration (50 ppm) pendant 105 minutes grâce aux mêmes dispositifs photochimiques et électrochimiques de la première et de la seconde expérience mis en oeuvre simultanément dans un dispositif du type de celui décrit ci-dessus.

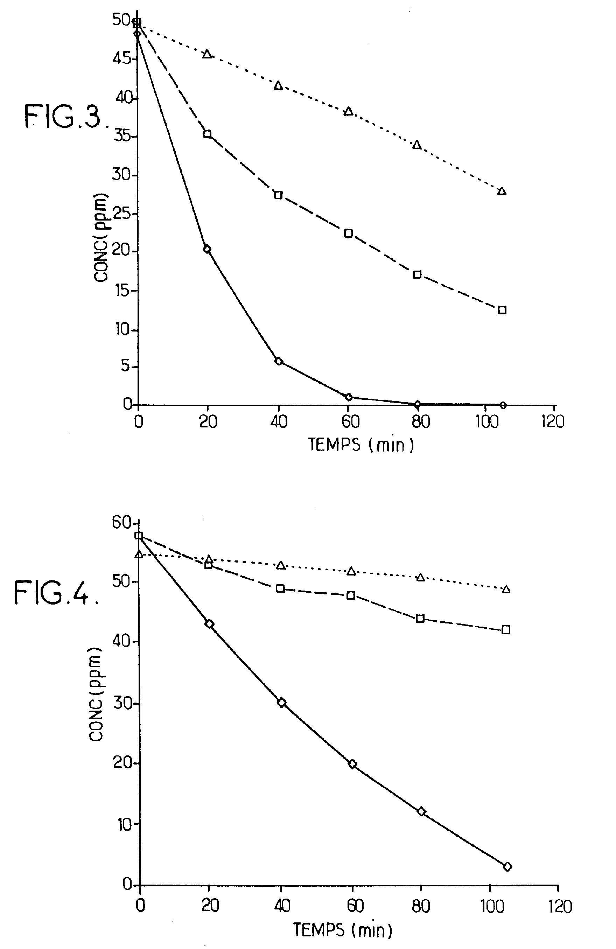

Les résultats mesurés sont reportés sur la Figure 3 qui est un graphique montrant la concentration de phénol en fonction du temps de traitement en minutes. Sur la Figure 3 :

- la courbe représentée par les triangles est la dégradation du phénol par électrolyse seulement,
- la courbe représentée par les carrés est la dégradation du phénol par VUV uniquement,
- la courbe représentée par les losanges est la dégradation du phénol selon le procédé conforme à l'invention

Pour chacune des expériences ci-dessus, on a également mesuré la concentration résiduelle en COT (Carbone Organique Total) contenu dans la solution à traiter (correspondant au phénol et aux composés organiques résultant des différentes étapes de dégradation du phénol) en fonction du temps de traitement en minutes.

Les résultats obtenus sont reportés sur la Figure (4) sur laquelle,

- la courbe représentée par les triangles pleins est la dégradation du COT par électrolyse seulement,
- la courbe représentée par les carrés pleins est la dégradation du COT par VUV uniquement, et
- la courbe représentée par les losanges pleins est la dégradation du COT selon le procédé conforme à l'invention.

Les expériences utilisant simultanément la photolyse UV et l'électrolyse ont montré des vitesses de dégradation du phénol et de diminution du COT améliorées. En comparant les données expérimentales avec les valeurs obtenues pour l'électrolyse seule et pour la photolyse seule et la somme de ces expériences, l'effet de la combinaison des deux procédés sur la dégradation du phénol s'est montrée purement additive. Cependant, la diminution du COT a été notablement augmentée, confirmant ainsi le fait qu'une synergie s'établit lors d'un traitement électro/photochimique couplé.

EXEMPLE 2 : DEGRADATION DE L'ACIDE SUBERIQUE

De la même façon que dans l'exemple 1, on réalise trois expériences mais en remplaçant la solution de phénol par une solution d'acide subérique à 85 ppm et avec une durée de traitement de 120 minutes.

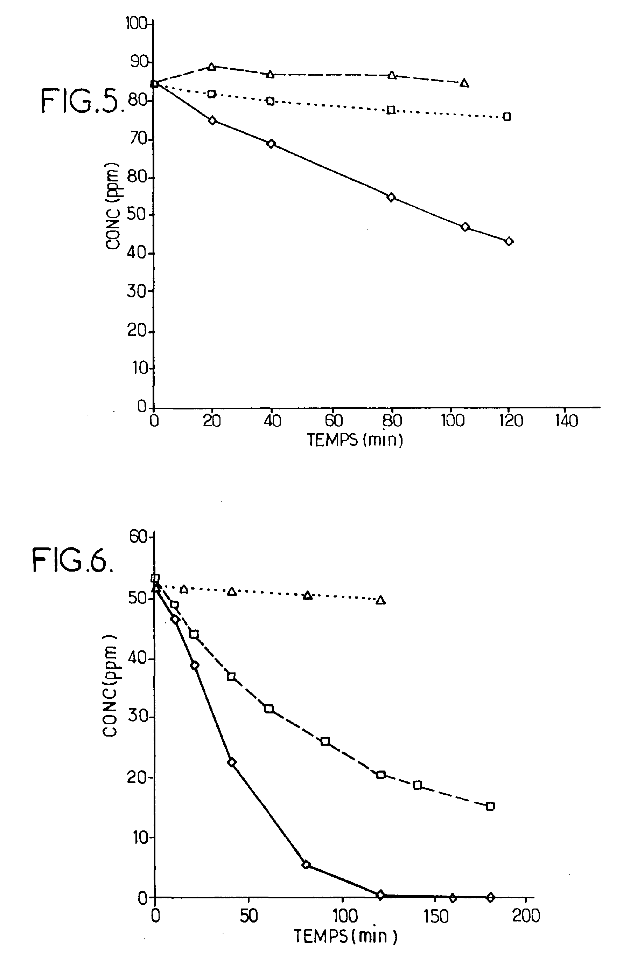

Les mêmes mesures que dans l'exemple 1 sont effectuées au cours du temps et les résultats sont reportés sur la Figure 5. On a ainsi les courbes de :

- l'électrolyse seule (triangles pleins) par des mesures à 0, 20, 40, 80 et 100 minutes,
- la photolyse UV extrême seule (carrés pleins) à 0, 20, 40, 80 et 120 minutes,
- et enfin la photolyse UV extrême et l'électrolyse (losanges pleins) par des mesures à 0, 20, 40, 80 et 120 minutes.

En accord avec l'hypothèse de travail et les données de l'analyse, les expériences d'électrolyse seule n'ont pas conduit à l'élimination du COT.

La diminution du COT par photolyse VUV seule a été observée, mais sa vitesse est plus faible que celle prévue par les calculs à partir des vitesses observées pour le phénol. Ceci peut s'expliquer par la différence de réactivité des deux composés avec les radicaux hydroperoxyles. En effet, d'après la littérature, le phénol est d'abord dégradé par les radicaux hydroperoxyles formés lors de la photolyse VUV de l'eau. Les radicaux $HO_2\bullet$ peuvent diffuser vers le volume de la solution grâce à leur durée de vie plus longue et ainsi étendre la zone réactionnelle affectant ainsi la vitesse de dégradation du COT. L'hypothèse selon laquelle l'acide subérique ne réagit probablement que très lentement avec les radicaux $HO_2\bullet$ est étayée par les expériences d'électrolyse, où très peu de dégradation de l'acide subérique et du COT ont été observées alors que la dégradation électrochimique du COT des solutions de phénol est initiée par les radicaux $HO_2\bullet$.

Néanmoins, une nette accélération de la dégradation du COT a été observée pour les expériences de photolyse de l'eau VUV et électrolyse combinées pour l'acide subérique.

EXEMPLE 3 : DEGRADATION DE L'ACIDE BENZOÏQUE ET ACIDE 3-NITROBENZOÏQUE

On réalise la dégradation de l'acide benzoïque en solution aqueuse à 53 ppm et pour une durée totale de traitement de 240 minutes selon le mode opératoire de l'exemple 1.

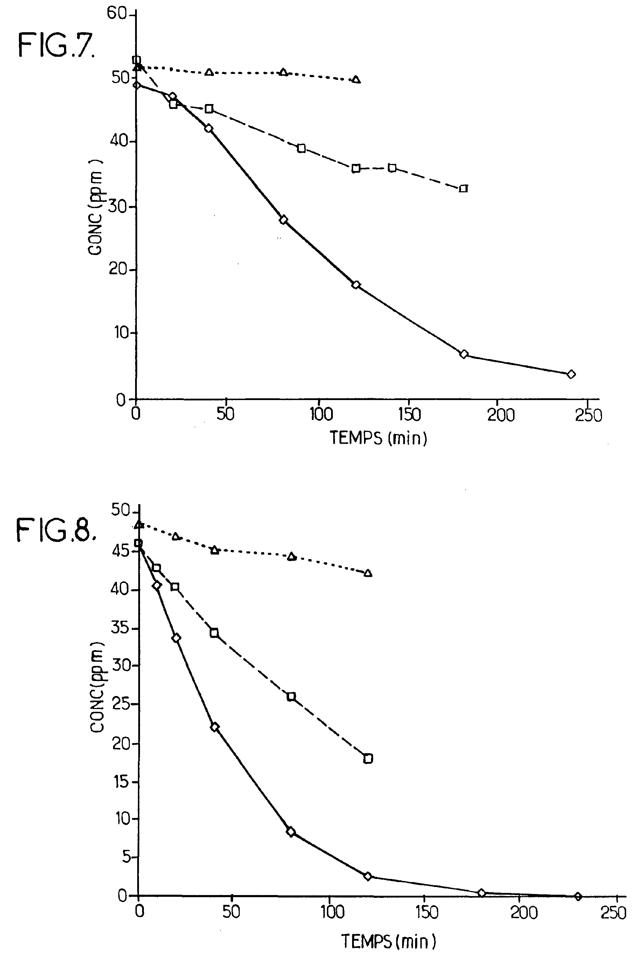

Des mesures sur la concentration résiduelle en acide benzoïque sont effectuées en fonction du temps et les résultats sont reportés sur la Figure 6 :

- l'électrolyse seule est représentée par les triangles vides pour des mesures à 0, 20, 40, 80 et 120 minutes,
- la photolyse UV extrême seule est représentée par des carrés vides pour des mesures à 0, 10, 20, 40, 60, 90, 120, 140 et 180 minutes,
- et enfin la photolyse UV extrême et l'électrolyse est représentée par les losanges vides pour des mesures à 0, 10, 20, 40, 80, 120, 160 et 180 minutes.

On effectue aussi des mesures sur la concentration résiduelle en Carbone Organique Non Purgeable (NOPC) de l'acide benzoique en fonction du temps. Les résultats sont reportés sur la Figure 7 :

- l'électrolyse seule est représentée par les triangles pleins pour des mesures à 0, 20, 40, 80 et 120 minutes,
- la photolyse UV extrême seule est représentée par des carrés pleins pour des mesures à 0, 10, 20, 40, 90, 120, 140 et 180 minutes,
- et enfin la photolyse UV extrême et l'électrolyse est représentée par les losanges pleins pour des mesures à 0, 10, 20, 40, 80, 120, 160 et 180 minutes.

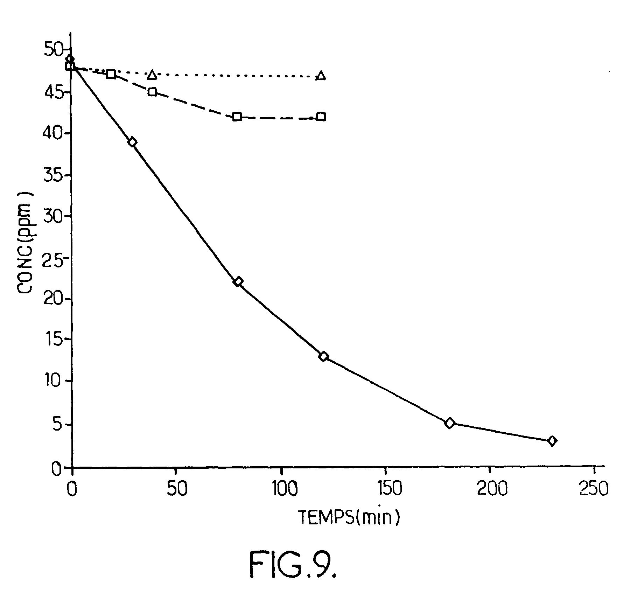

On réalise la même expérience faite sur l'acide benzoïque avec une solution à 48 ppm d'acide 3-nitrobenzoïque. On mesure la concentration en acide 3-nitrobenzoïque résiduel et en CONP au cours du temps. Les résultats sont reportés respectivement sur la Figure 8 et sur la Figure 9.

Sur la Figures 8 :

- - l'électrolyse seule est représentée par les triangles vides pour des mesures à 0, 20, 40, 80 et 120 minutes,
- la photolyse UV extrême seule est représentée par des carrés vides pour des mesures à 0, 10, 20, 40, 80 et 120 minutes,
- et enfin la photolyse UV extrême et l'électrolyse est représentée par les losanges vides pour des mesures à 0, 10, 20, 40, 80, 120, 180 et 230 minutes.

On effectue aussi des mesures sur la concentration résiduelle en Carbone Organique Non Purgeable (NOPC) de l'acide 3-nitrobenzoïque en fonction du temps. Les résultats sont reportés sur la Figure 9 :

- l'électrolyse seule est représentée par les triangles pleins pour des mesures à 0, 40, 80 et 120 minutes,
- la photolyse UV extrême seule est représentée par des carrés pleins pour des mesures à 0, 20, 40, 90, 120, 140 et 180 minutes,
- et enfin la photolyse UV extrême et l'électrolyse est représentée par les losanges pleins pour des mesures à 0, 20, 40, 80, 120, 160, 180 et 240 minutes.

Les expériences de photolyse de l'eau VUV couplée à l'électrolyse ont montré une dégradation accélérée de CONP/substrat des deux composés comparée à la somme des expériences de photolyse VUV et d'électrolyse séparées.

L'effet d'accélération de la dégradation de l'acide benzoïque est plus prononcé ; il est en effet plus stable électrochimiquement que l'acide 3-nitro benzoïque (celui-ci subit une réduction à la cathode). Ceci montre que la diffusion est l'étape limitante de la dégradation du composé (réaction de pseudo premier ordre) et que le bullage d'oxygène améliore le transfert de masse.

Le dispositif selon l'invention répond particulièrement bien aux exigences de l'industrie électronique qui nécessite l'utilisation d'une eau très pure. En effet, d'une part, le dispositif selon l'invention s'adapte facilement à la chaîne de fabrication et d'autre part, il fournit une eau à haut degré de pureté puisqu'il permet d'éliminer les polluants organiques.

Le dispositif selon l'invention répond aussi très bien aux besoins de l'industrie pharmaceutique où certains volumes d'eau doivent être traités séparément du reste de l'eau utilisée dans la fabrication de médicament afin d'obtenir une eau de pureté supérieure.

**Revendications**

1. Procédé d'oxydation de composés organiques en solution aqueuse **caractérisé par le fait qu'**on réalise une photolyse à rayonnement ultraviolet extrême et qu'on produit du dioxygène par électrochimie.

2. Procédé selon la revendication 1 **caractérisé par le fait que** le rayonnement ultraviolet extrême a une longueur d'onde comprise entre 120 nm et 210 nm, de préférence comprise entre 160 nm et 210 nm, et plus préférentiellement encore égale à environ 172 nm.

3. Procédé selon la revendication 1 ou 2 **caractérisé par le fait que** la production électrochimique de dioxygène se fait sur anode par électrolyse de la solution aqueuse.

**4.** Procédé selon l'une quelconque des revendications 1 à 3 **caractérisé par le fait que** les composés organiques sont toxiques et non traitables par des méthodes biologiques ou par l'addition de produits chimiques oxydants.

**5.** Procédé selon l'une quelconque des revendications 1 à 4 **caractérisé par le fait qu'**on conduit l'oxydation des composés organiques jusqu'à minéralisation complète des composés organiques ou qu'on arrête l'oxydation avant minéralisation complète des composés organiques.

**6.** Dispositif pour l'oxydation de composés organiques en solutions aqueuses comprenant un réacteur dans lequel se trouve la solution à traiter et comprenant au moins une lampe, placée de façon à irradier au moins une partie de la solution à traiter à un rayonnement ultraviolet extrême, et au moins une cathode et une anode, ladite anode étant au moins partiellement immergée dans la solution à traiter et placée à proximité de la zone de solution irradiée par ladite lampe.

**7.** Dispositif selon la revendication 6 dans lequel la lampe émet à une longueur d'onde comprise entre 120 nm et 210 nm, de préférence comprise entre 160 nm et 210 nm, et plus préférentiellement encore égale à environ 172 nm.

**8.** Dispositif selon la revendication 6 ou 7 dans lequel l'anode est en acier ou en platine et/ou peut être une anode DSA (Dimensionally Stable Anode).

**9.** Dispositif selon l'une quelconque des revendications 6 à 8 dans lequel les électrodes sont des électrodes séparées, notamment par une membrane polymère soluble.

**10.** Dispositif selon l'une quelconque des revendications 6 à 9 dans lequel la distance séparant la lampe de l'anode est inférieure à 10 mm, de préférence inférieure à 4 mm et plus préférentiellement encore d'environ 2 mm.

**11.** Dispositif selon l'une quelconque des revendications 6 à 10, dans lequel les électrodes et la lampe sont des cylindres concentriques.

**12.** Dispositif selon la revendication 11 dans lequel la cathode est placée au centre, entourée par une membrane laissant passer les ions, la membrane est entourée par une anode et l'anode est entourée par une lampe à ultraviolet extrême.

**13.** Dispositif selon l'une quelconque des revendications 6 à 12, dans lequel la lampe à ultraviolet extrême est une lampe au mercure de basse pression ou une lampe à excimère au xénon ou au fluorure d'argon.

# FIG.1

FIG.2.

FIG.3.

FIG.4.

FIG.5.

FIG.6.

FIG.7.

FIG.8.

FIG.9.

**Office européen des brevets**

## RAPPORT DE RECHERCHE EUROPEENNE

Numéro de la demande

EP 01 40 1365

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | DE 44 00 308 A (BLASCHKE MANFRED DR RER NAT ;KLOSE EDGAR DR SC NAT (DE); KREYSIG D) 6 juillet 1995 (1995-07-06) * le document en entier * | 1 | C02F1/32 C02F1/467 |
| A | US 3 943 044 A (FENN III ROBERT W ET AL) 9 mars 1976 (1976-03-09) * le document en entier * | 1 | |
| A | US 3 755 827 A (LEPORE A ET AL) 4 septembre 1973 (1973-09-04) * le document en entier * | 1 | |
| A | WO 99 01382 A (MORGAN PHILIP GRAEME) 14 janvier 1999 (1999-01-14) * le document en entier * | 1 | |
| A | US 5 395 522 A (MELANSON PAUL C ET AL) 7 mars 1995 (1995-03-07) * le document en entier * | 1 | |
| A | DE 44 14 264 A (UMEX GES FUER UMWELTBERATUNG U) 26 octobre 1995 (1995-10-26) * le document en entier * | 1 | DOMAINES TECHNIQUES RECHERCHES (Int.Cl.7) C02F C01F C25B |
| P,X | US 6 180 014 B1 (SALAMA AMIR) 30 janvier 2001 (2001-01-30) * le document en entier * ----- | 1,2,6-8, 11 | |

Le présent rapport a été établi pour toutes les revendications

| Lieu de la recherche | Date d'achèvement de la recherche | Examinateur |
|---|---|---|
| LA HAYE | 29 août 2001 | Devisme, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 01 40 1365

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-08-2001

| Document brevet cité au rapport de recherche | | Date de publication | Membre(s) de la famille de brevet(s) | | Date de publication |
|---|---|---|---|---|---|
| DE 4400308 | A | 06-07-1995 | AUCUN | | |
| US 3943044 | A | 09-03-1976 | GB | 1388199 A | 26-03-1975 |
| | | | ZA | 7206080 A | 30-05-1973 |
| US 3755827 | A | 04-09-1973 | CA | 951455 A | 23-07-1974 |
| | | | AU | 4924272 A | 23-05-1974 |
| | | | BE | 790886 A | 01-03-1973 |
| | | | DE | 2262593 A | 05-07-1973 |
| | | | FR | 2166955 A | 17-08-1973 |
| | | | GB | 1349108 A | 27-03-1974 |
| | | | IT | 973810 B | 10-06-1974 |
| | | | JP | 48074047 A | 05-10-1973 |
| | | | LU | 66779 A | 19-04-1973 |
| | | | NL | 7215401 A | 03-07-1973 |
| | | | SE | 380561 B | 10-11-1975 |
| | | | ZA | 7207806 A | 25-07-1973 |
| WO 9901382 | A | 14-01-1999 | AU | 8227698 A | 25-01-1999 |
| | | | EP | 1017633 A | 12-07-2000 |
| | | | GB | 2342658 A | 19-04-2000 |
| US 5395522 | A | 07-03-1995 | AU | 673584 B | 14-11-1996 |
| | | | AU | 6244194 A | 14-09-1994 |
| | | | CA | 2156298 A | 01-09-1994 |
| | | | EP | 0686131 A | 13-12-1995 |
| | | | JP | 8500291 T | 16-01-1996 |
| | | | WO | 9419284 A | 01-09-1994 |
| DE 4414264 | A | 26-10-1995 | AUCUN | | |
| US 6180014 | B | 30-01-2001 | WO | 0142144 A | 14-06-2001 |

EPO FORM P0460